(19) Europäisches Patentamt / European Patent Office / Office européen des brevets

(11) **EP 4 039 976 A1**

(12) **EUROPEAN PATENT APPLICATION**
published in accordance with Art. 153(4) EPC

(43) Date of publication:
**10.08.2022 Bulletin 2022/32**

(21) Application number: **20872100.1**

(22) Date of filing: **10.03.2020**

(51) International Patent Classification (IPC):
**F04B 39/00** (2006.01)

(52) Cooperative Patent Classification (CPC):
**F04B 27/053; F04B 27/0409; F04B 35/01;
F04B 35/04; F04B 39/0005**

(86) International application number:
**PCT/JP2020/010175**

(87) International publication number:
**WO 2021/065037 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2019 JP 2019181197**

(71) Applicant: HITACHI INDUSTRIAL EQUIPMENT
SYSTEMS CO., LTD.
Chiyoda-ku
Tokyo 101-0022 (JP)

(72) Inventors:
• **NARISAWA, Nobuyuki**
  **Tokyo 101-0022 (JP)**
• **UMEDA, Ken**
  **Tokyo 101-0022 (JP)**
• **GOTO, Sho**
  **Tokyo 101-0022 (JP)**
• **SUZUKI, Tatsuya**
  **Tokyo 101-0022 (JP)**

(74) Representative: **MERH-IP Matias Erny Reichl
Hoffmann
Patentanwälte PartG mbB
Paul-Heyse-Strasse 29
80336 München (DE)**

(54) **COMPRESSOR**

(57) There is provided a compressor including: a piston that reciprocates inside a cylinder; a valve plate that closes an end portion of the cylinder; a connecting rod that supports the piston; a crankshaft that applies a rotating force to an end portion of the connecting rod; and a crankcase that rotatably supports the crankshaft. The piston is an oscillating piston that reciprocates while oscillating inside the cylinder according to rotation of the crankshaft. A central axis of an inner diameter of the cylinder is disposed at a position shifted by an offset amount e with respect to a rotation center axis of the crankshaft. An upper surface of the piston is substantially parallel to a crankcase side surface of the valve plate in a state where the piston is at a top dead center.

FIG. 5A

**Description**

TECHNICAL FIELD

The present invention relates to a compressor.

BACKGROUND ART

In a reciprocating compressor of the related art which compresses a fluid, for example, as illustrated in Patent Document 1 and Patent Document 2, a technique has been known by which a central axis of a cylinder is disposed to be shifted by a certain offset amount with respect to a rotation center of a crankshaft.

CITATION LIST

PATENT DOCUMENT

Patent Document 1: JP 3174674 U
Patent Document 2: JP 2004-92638 A

SUMMARY OF THE INVENTION

PROBLEMS TO BE SOLVED BY THE INVENTION

When the cylinder is disposed to be offset by the application of the technique of Patent Document 1 and Patent Document 2, the oscillation angle at a top dead center is not 0, so that the gap volume increases and the volumetric efficiency of the compressor deteriorates, which is a critical problem.

In Patent Document 1, as illustrated in Fig. 13, the gap volume is reduced by adopting a configuration in which an upper surface of a piston and a crankcase side surface of a valve plate are parallel to each other at a crank angle at which a line segment connecting the plane center ($F_0$ in Fig. 6 of Patent Document 1) of a gas compression acting surface and the center of a big end portion bearing of a connecting rod, namely, an axis in a longitudinal direction of the connecting rod is parallel to a central axis of an inner diameter of the cylinder.

However, the piston is not at the top dead center in Fig. 13. For this reason, even if the upper surface of the piston and the crankcase side surface of the valve plate are parallel to each other in Fig. 13, when a transition is made from the state illustrated in Fig. 13 to the state of the top dead center, there is a possibility that the upper surface of the piston and the crankcase side surface of the valve plate interfere with each other, and the effect of reducing the gap volume is also not sufficient.

In addition, Fig. 6 of Patent Document 2 illustrates a case in which the crank angle is 0 degrees to be described later, and in that case, an upper surface of a piston and a crankcase side surface of a valve plate are parallel to each other. In such a configuration, in Patent Document 2, similar to Patent Document 1, when a transition is made to the state of the top dead center, there is a possibility that the upper surface of the piston and the crankcase side surface of the valve plate interfere with each other, and the effect of reducing the gap volume is also not sufficient.

An object of the present invention is to prevent interference between a piston and a valve plate, and suppress an increase in gap volume.

SOLUTIONS TO PROBLEMS

According to one preferred example of the present invention, there is provided a compressor including: a piston that reciprocates inside a cylinder; a valve plate that closes an end portion of the cylinder; a connecting rod that supports the piston; a crankshaft that applies a rotating force to an end portion of the connecting rod; and a crankcase that rotatably supports the crankshaft.

The piston is an oscillating piston that reciprocates while oscillating inside the cylinder according to rotation of the crankshaft.

A central axis of an inner diameter of the cylinder is disposed at a position shifted by an offset amount e with respect to a rotation center axis of the crankshaft.

An upper surface of the piston is substantially parallel to a crankcase side surface of the valve plate in a state where the piston is at a top dead center.

EFFECTS OF THE INVENTION

According to the present invention, interference between the piston and the valve plate can be prevented, and an increase in gap volume can be suppressed.

BRIEF DESCRIPTION OF THE DRAWINGS

Fig. 1 is a view illustrating a configuration example of the entirety of a compressor in a first embodiment.
Fig. 2 is a view illustrating an internal configuration of a compressor main body in the first embodiment.
Fig. 3A is a view illustrating an oscillating piston structure using a lip ring.
Fig. 3B is a view illustrating an oscillating piston structure using a piston ring.
Fig. 3C is a view illustrating an oscillating piston structure using a piston ring in the first embodiment.
Fig. 3D is a view illustrating the oscillating piston structure in the first embodiment.
Fig. 4 shows diagrams illustrating the operation of an oscillating piston in the first embodiment.
Fig. 5A is an internal configuration view of the compressor main body illustrating the state of the piston 33 at a top dead center.
Fig. 5B is a view illustrating a modification example in which a lower surface of a valve plate is inclined.
Fig. 5C is a view illustrating an internal configuration of a compressor main body in which a central axis of a cylinder inner peripheral surface is disposed to be inclined.
Fig. 6 is a graph showing a relationship between an oscillation angle and a cylinder internal pressure and a crank angle in a general reciprocating compressor.
Fig. 7 is a graph showing a relationship between a cylinder offset amount and a blowby amount of a compressor in the first embodiment.
Fig. 8A is a view illustrating a configuration of a piston and a connecting rod in a second embodiment.
Fig. 8B is a view illustrating a configuration of the piston and a connecting rod in the first embodiment for comparison.
Fig. 9 is a view illustrating a configuration of a piston in a third embodiment.
Fig. 10A is a view illustrating a case in which a right end of an upper surface of the piston in the third embodiment is at a highest point.
Fig. 10B is a view illustrating a case in which the piston in the third embodiment is at a top dead center.
Fig. 10C is a view illustrating a case in which a left end of the upper surface of the piston in the third embodiment is at a highest point.

MODE FOR CARRYING OUT THE INVENTION

Hereinbelow, embodiments of the present invention will be described in detail with reference to the drawings.

First embodiment

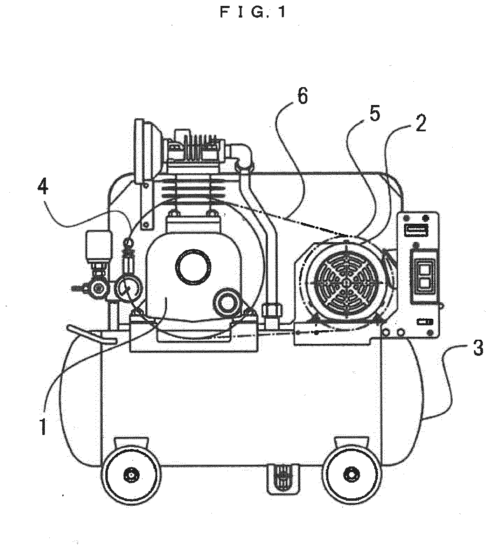

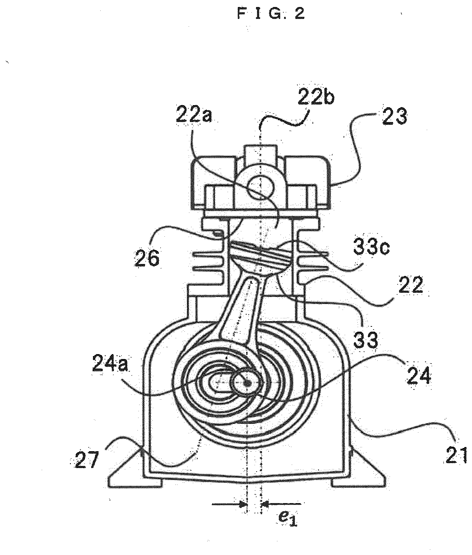

Fig. 1 illustrates a schematic view of a compressor in a first embodiment. In addition, Fig. 2 illustrates the internal structure of a compressor main body 1 in Fig. 1.
The compressor illustrated in Fig. 1 includes the compressor main body 1, an electric motor 2 that drives the compressor main body 1, and a tank 3 that stores a fluid discharged by the compressor main body 1. The compressor main body 1 compresses a fluid, and as illustrated in Fig. 2, the internal structure thereof includes a crankcase 21 that rotatably supports a crankshaft, one cylinder 22 that protrudes from the crankcase 21 in a vertical direction, a valve plate 26 that closes an upper portion of the cylinder 22, a cylinder head 23, and a crankshaft 24 that is rotatably supported at the center of the crankcase 21.
When the crankshaft 24 inside the crankcase 21 rotates, a rotating force is applied to an end portion of a connecting rod 32 to cause a piston 33, which is installed inside the cylinder 22, to reciprocate in the vertical direction, and as a result, the compressor main body 1 suctions a fluid from outside the cylinder, compresses the fluid, and discharges the compressed fluid.
Incidentally, in Figs. 1 and 2, for simplicity of description, the compressor is illustrated as a single cylinder and single stage compressor including only a pair of a piston and a cylinder, but may be a compressor including a plurality of pistons and cylinders in series or radially with respect to a crankshaft.
The compressor main body 1 is disposed on and fixed to the tank 3 in a state where the crankshaft 24 is disposed in parallel to a rotating shaft of the electric motor 2. A compressor pulley 4 is fixed to the crankshaft 24, and an electric motor pulley 5 is fixed to an electric motor shaft. The compressor pulley 4 provided in the compressor main body 1 includes blades, and as the blades rotate, cooling air is generated toward the compressor main body 1 to promote heat dissipation of the compressor main body 1.

A power transmission belt 6 which transmits power between the compressor pulley 4 and the electric motor pulley 5 is wound around the compressor pulley 4 and the electric motor pulley 5. Accordingly, as the electric motor 2 rotates, the crankshaft 24 of the compressor main body 1 is rotationally driven via the electric motor pulley 5, the power transmission belt 6, and the compressor pulley 4, so that the compressor main body 1 compresses a fluid.

In this case, a rotation direction of the crankshaft 24 is a counterclockwise direction, and a state where a line segment connecting the rotation center of the crankshaft 24 and the center of a big end portion bearing 31 of the connecting rod 32, namely, a crank arm exactly points toward the top of the figure is defined as 0 degrees. This crank angle also indicates a state where the crank arm and a central axis of a cylinder inner diameter 22a are parallel to each other.

Incidentally, in Fig. 1, for simplicity of description, the compressor main body 1 is configured to be connected to the electric motor 2 via the power transmission belt 6; however, the compressor may be such that the compressor main body 1 and the electric motor 2 are integrated by directly joining the crankshaft 24 of the compressor main body 1 and the rotating shaft of the electric motor 2 using combining means such as a coupling.

The structure around the piston in Fig. 2 will be described. The piston 33 of this drawing is an oscillating piston type in which the piston is integrally formed with the connecting rod 32. In this type, as the crankshaft 24 rotates, the piston 33 reciprocates while oscillating inside the cylinder 22.

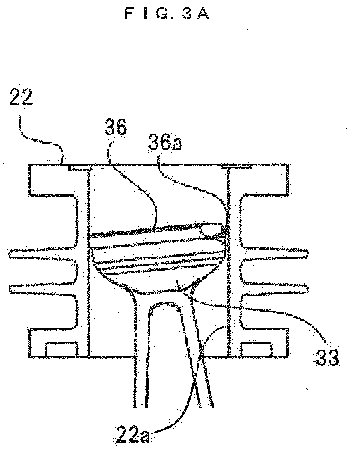

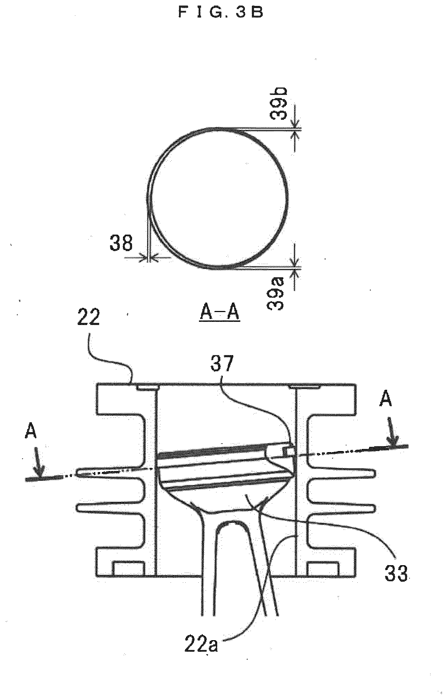

In the oscillating piston type, as a main seal ring structure, the piston 33 may include a lip ring 36 in contact with the cylinder inner peripheral surface (cylinder inner diameter) 22a as illustrated in Fig. 3A, or the piston 33 may include a piston ring 37 in contact with the cylinder inner peripheral surface (cylinder inner diameter) 22a as illustrated in Fig. 3B. Here, an A-A cross section of a lower figure of Fig. 3B is illustrated in an upper figure of Fig. 3B. A cylinder gap 38 in an oscillation direction and cylinder gaps 39a and 39b in a main axial direction are generated between the piston 33 and the cylinder inner diameter 22a.

In each seal ring type, the following problems occur as the oscillation angle increases.

<Lip ring>

When a lip portion 36a repeatedly comes into contact with the cylinder inner diameter 22a, bending stress increases, and thus fatigue breakage occurs in the vicinity of the root of a rounded portion.

<Piston ring>

A. Since there is no component such as the lip ring 36 which guides the piston 33, there is a risk that upper and lower end corners of the piston 33 interfere with the cylinder inner diameter (cylinder inner peripheral surface) 22a. When a relief cut is provided at the lower end corner to avoid interference, the area of a lower surface of a ring groove that supports the piston ring 37 which has received a gas load is reduced. Therefore, the cylinder gap 38 in the oscillation direction is increased, thereby causing deformation in which the piston ring falls into the gap.

B. Deformation occurs in which the piston ring falls into the cylinder gap 38 in the oscillation direction.

C. Since the piston ring is thicker and more rigid than the lip ring, the followability with respect to the cylinder inner diameter 22a during oscillation deteriorates, the sealing performance decreases, and the blowby loss increases.

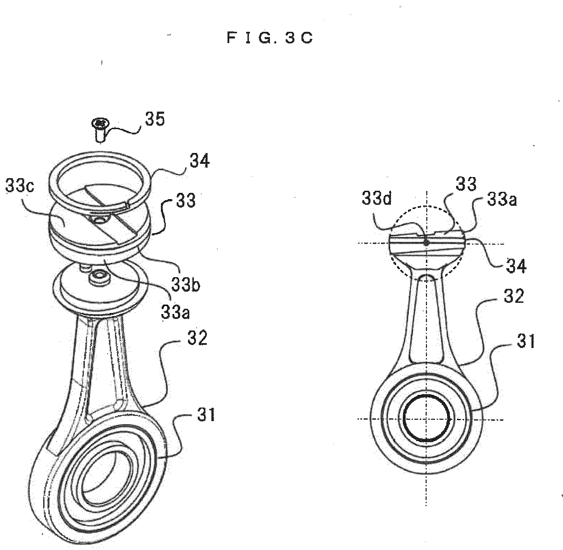

In order to solve the problems of the lip ring or the problems A to C of the piston ring described above, in the present embodiment, the oscillating piston illustrated in Fig. 3C is used. In Fig. 3C, the piston 33 is formed as a component separate from the connecting rod 32, and the piston 33 is fastened (fixed) to the connecting rod 32 in a reciprocating direction with a screw 35. In addition, an outer peripheral surface 33a of the piston 33 is a spherical surface. The piston 33 may be integrated with the connecting rod 32.

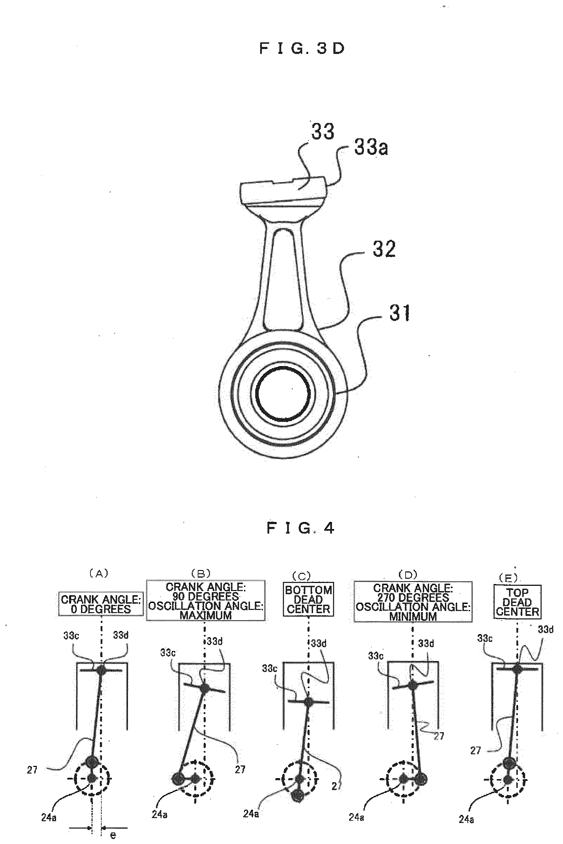

A piston ring 34 is used as a seal ring, and the piston ring 34 is fitted to a ring groove 33b, which is provided in the piston 33, with a certain gap therebetween. Incidentally, instead of using the piston ring and the ring groove, the configuration illustrated in Fig. 3D may be adopted.

When the compressor main body 1 is an oil-free type in which an oil is not used for lubrication of sliding parts, the piston 33 is made of a resin material having good wear resistance. Accordingly, the outer peripheral surface 33a of the piston can directly slide against the cylinder inner peripheral surface 22a.

In addition, an extension line of a central axis 22b of the cylinder inner peripheral surface 22a in Fig. 2 is offset to a counterload side (in a right direction of the figure) by a distance $e_1$ with respect to a rotation center 24a of the crankshaft 24. A rotation axis of the crankshaft 24 is configured not to intersect the central axis of the cylinder inner diameter, so that the compressor main body is formed in which the offset is generated.

In this case, the following relational expression is established for the offset amount $e_1$.

[Equation 1]

$$\beta_{TDC} = -\beta_{Lmin} \qquad (1)$$

Here, $\beta$ represents an oscillation angle. Subscripts TDC and Lmin represent an oscillation angle at a top dead center and a minimum oscillation angle at a compression stroke, respectively. Incidentally, the offset amount $e_1$ is related to the oscillation angles as shown in the following equations.

[Equation 2]

$$\beta_{TDC} = \sin^{-1} \frac{r \sin \theta_{TDC} - e_1}{L} \qquad (2)$$

[Equation 3]

$$\beta_{Lmin} = \sin^{-1} \frac{r \sin(\pi \cdot 3/2) + e_1}{L} \qquad (3)$$

[Equation 4]

$$\theta_{TDC} = \sin^{-1} \left( \frac{e_1}{L + r} \right) + 2\pi \qquad (4)$$

Here, $\theta$ represents a crank angle, and the subscripts TDC and Lmin represent a crank angle at the top dead center and a minimum crank angle at the compression stroke, respectively. r represents a crank radius, and L represents the length of the connecting rod and the length of a line segment connecting the center of the big end portion bearing 31 of the connecting rod and the center of the spherical outer peripheral surface 33a of the piston.

Namely, Equations (1) to (3) represent that the offset amount $e_1$ is determined such that the absolute value of the oscillation angle of the connecting rod at the top dead center and the absolute value of the minimum value (Fig. 4(D)) of the oscillation angle of the connecting rod at the compression stroke are substantially equal to each other. Here, being substantially equal also includes the case of being equal.

Fig. 4 schematically illustrates state diagrams while the crankshaft 24 of the compressor main body 1 in the present embodiment rotates one revolution.

Fig. 4(A) is a diagram illustrating a positional relationship between a line segment 27 connecting the center of the big end portion bearing 31 of the connecting rod and a center 33d of the spherical outer peripheral surface 33a of the piston, an upper surface 33c of the piston 33, and the rotation center 24a of the crankshaft 24 when the crank angle is 0 degrees. In this case, as will be described later, the upper surface 33c of the piston 33 is not orthogonal to the line segment 27 connecting the center of the big end portion bearing 31 of the connecting rod and the center 33d of the spherical outer peripheral surface 33a of the piston.

Fig. 4(B) is a diagram illustrating a positional relationship between the line segment 27 connecting the center of the big end portion bearing 31 of the connecting rod and the center 33d of the spherical outer peripheral surface 33a of the piston, the upper surface 33c of the piston 33, and the rotation center 24a of the crankshaft 24 when the crank angle is 90 degrees. In this case, the oscillation angle is maximized.

Fig. 4(C) is a diagram illustrating a positional relationship between the line segment 27 connecting the center of the big end portion bearing 31 of the connecting rod and the center 33d of the spherical outer peripheral surface 33a of the piston, the upper surface 33c of the piston 33, and the rotation center 24a of the crankshaft 24 at a bottom dead center.

Fig. 4(D) is a diagram illustrating a positional relationship between the line segment 27 connecting the center of the big end portion bearing 31 of the connecting rod and the center 33d of the spherical outer peripheral surface 33a of the piston, the upper surface 33c of the piston 33, and the rotation center 24a of the crankshaft 24 when the crank angle is 270 degrees. In this case, the oscillation angle is minimized.

Fig. 4(E) is a diagram illustrating a positional relationship between the line segment 27 connecting the center of the big end portion bearing 31 of the connecting rod and the center 33d of the spherical outer peripheral surface 33a of the piston, the upper surface 33c of the piston 33, and the rotation center 24a of the crankshaft 24 at the top dead center.

The crank angle at the bottom dead center is an angle slightly smaller than 180 degrees.

The crank angle at the top dead center is an angle of approximately 355 degrees slightly smaller than 360 degrees.

The oscillation angle refers to an angle between the line segment 27, which connects the center of the big end portion bearing 31 of the connecting rod and the center 33d of the spherical outer peripheral surface 33a of the piston, and the central axis of the cylinder inner diameter.

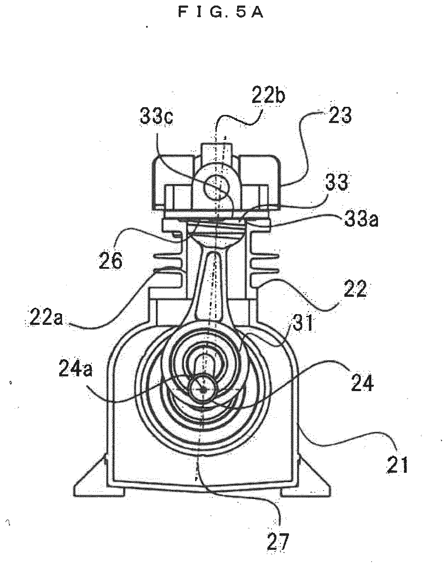

In addition, Fig. 5A illustrates the state of the piston 33 at the top dead center. As illustrated in the drawing, the upper surface 33c of the piston 33 or a lower surface of the valve plate 26 is not orthogonal to the line segment 27 connecting the center of the big end portion bearing 31 of the connecting rod and the center of the spherical outer peripheral surface 33a of the piston.

For this reason, the upper surface 33c of the piston is also not parallel to the lower surface of the valve plate 26 in a state where the crank angle is 0 degrees.

The upper surface 33c of the piston 33 and the lower surface of the valve plate 26 are designed to be parallel to each other at the top dead center where a center point of the spherical outer peripheral surface 33a of the piston is farthest from the rotation center 24a of the crankshaft.

The present embodiment has the following merits.

Interference between the piston 33 and the valve plate 26 can be prevented, and an increase in gap volume can be suppressed.

Since the spherical outer peripheral surface 33a of the piston can directly slide against the cylinder inner peripheral surface 22a, the piston 33 can be allowed to interfere with the cylinder 22. In addition, even when the oscillation angle increases, the upper and lower end corners of the piston 33 do not come into contact with the cylinder inner peripheral surface 22a, so that wear or frictional loss caused by angled contact can be prevented.

Further, referring to Fig. 3D, the spherical outer peripheral surface 33a of the piston can be always in contact with the cylinder 22 on a plane orthogonal to the central axis of the cylinder 22, or maintain a very small gap therebetween. Accordingly, there are great merits that the spherical outer peripheral surface 33a of the piston itself can seal a compression chamber and the sealing performance thereof is not affected by the oscillation angle.

However, in view of the ease to assemble and the thermal expansion of the piston 33 or the amount of crush deformation caused by the internal pressure of the compression chamber to be described later, it is desirable that a very small gap is provided between the spherical outer peripheral surface 33a of the piston and the cylinder inner peripheral surface 22a in an initial state at room temperature. In this case, when the piston ring 34 is provided as illustrated in Fig. 3C, the piston ring 34 can seal this gap.

In this case, in the present embodiment, since the central axis 22b of the cylinder inner peripheral surface is disposed to be offset to the counterload side by the optimum amount $e_1$ with respect to the rotation center 24a of the crankshaft, the inclination of the piston ring 34 at the compression stroke can be suppressed, and a deterioration in sealing performance can be prevented. The effects will be described in detail below.

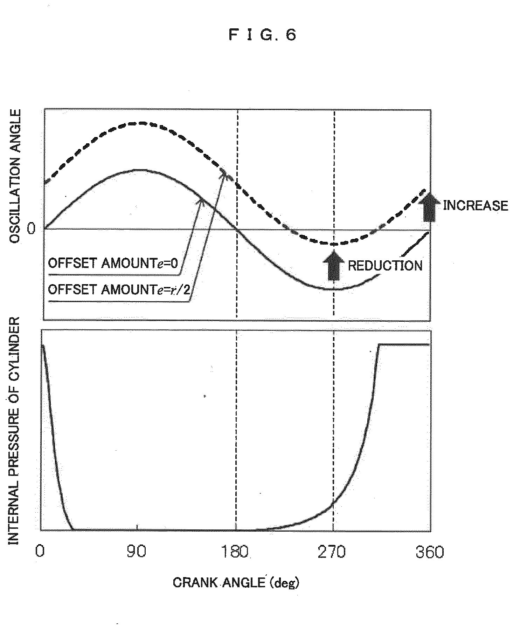

Fig. 6 shows a general relationship between the crank angle and the oscillation angle and a general relationship between the crank angle and the cylinder internal pressure. The larger the absolute value of the oscillation angle is, the more the sealing performance of the piston ring 34 deteriorates. When the offset amount is increased to reduce the minimum value $\beta_{Lmin}$ of the oscillation angle at the compression stroke, inversely, the oscillation angle $\beta_{TDC}$ at the top dead center tends to increase.

Since the amount of blowby loss leaking from the piston ring 34 increases as the internal pressure of the cylinder 22 increases, the sealing performance is further affected at the top dead center than at a crank angle of 270 degrees ($3/2\pi$) where the oscillation angle is naturally minimized. For this reason, it is necessary that the appropriate value of the offset amount is determined by balance between two oscillation angles described above.

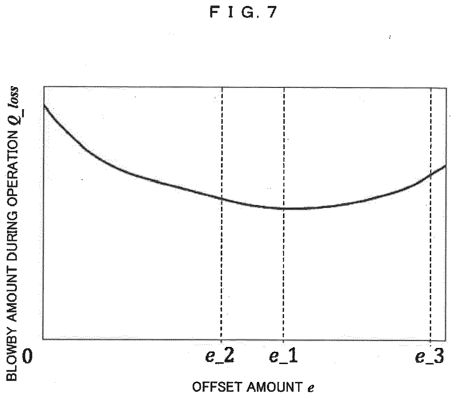

Fig. 7 shows the result of simulating a relationship between an offset amount e and a blowby amount $Q_{loss}$. It can be seen from the graph that the blowby amount $Q_{loss}$ is minimized when offset amount e = $e_1$, namely, in the vicinity of a condition where Equation (1) is established. The blowby amount is minimized with respect to the offset amount by combining the piston structure of the present embodiment. Namely, a deterioration in sealing performance of the piston ring can be prevented to the maximum extent.

In addition, since the upper surface 33c of the piston and the lower surface of the valve plate 26 are parallel to each other at the top dead center as illustrated in Fig. 5A, the gap volume can be minimized, and the theoretical volumetric efficiency of the compressor main body 1 can also be improved. Fig. 5A illustrates a configuration of the compressor in which the central axis of the cylinder inner diameter (cylinder inner peripheral surface) 22a is disposed along the vertical direction.

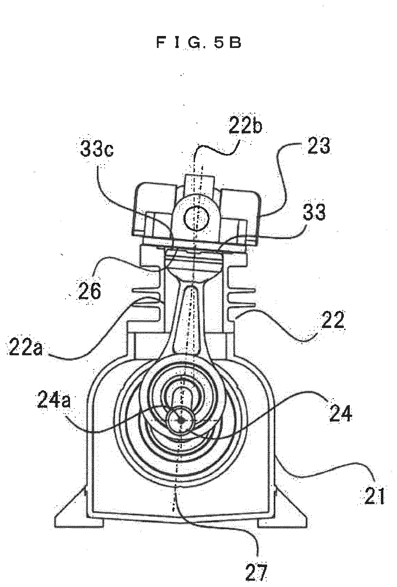

In the present embodiment, this state can be created by inclining the upper surface 33c of the piston, and naturally, the same state can be created by inclining the lower surface (crankcase side surface) of the valve plate 26 as illustrated in Fig. 5B. The shape illustrated in Fig. 5B has a merit that the processing cost can be reduced depending on a method for producing the piston 33.

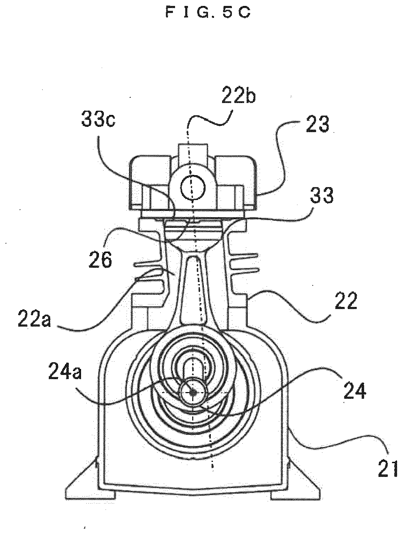

Further, in the present embodiment, for simplicity of description, the central axis of the cylinder inner peripheral surface 22a is always depicted as being aligned in the vertical direction of the figures; however, for example, Fig. 5C is a view illustrating an internal configuration of the compressor main body in which the central axis of the cylinder inner diameter (cylinder inner peripheral surface) 22a is disposed to be inclined. The same effects can also be obtained with the configuration illustrated in Fig. 5C. When compared to the state illustrated in Fig. 5B, this state has a merit that the appearance is better balanced since the inclination angle between the valve plate 26 and the cylinder head 23 can be reduced.

Incidentally, according to Fig. 7, the optimum value of the offset amount e is $e_1$; however, when it is difficult to cause the offset amount to coincide with this point in terms of layout, the offset amount is set to the range of Equation (5) determined from $e_2$ and $e_3$ to be described later, so that an increase in blowby amount $Q_{loss}$ can be suppressed to the minimum extent.

[Equation 5]

$$e_2 \leq e \leq e_3 \qquad (5)$$

Meanwhile, $e_2$ represents an offset amount at which the following equations are established.

[Equation 6]

$$\beta_{BDC} = -\beta_{Lmin} \qquad (6)$$

[Equation 7]

$$\beta_{BDC} = \sin^{-1}\frac{r\sin\theta_{BDC} + e_2}{L} \qquad (7)$$

[Equation 8]

$$\beta_{Lmin} = \sin^{-1}\frac{r\sin(\pi \cdot 3/2) + e_2}{L} \qquad (8)$$

[Equation 9]

$$\theta_{BDC} = \sin^{-1}\left(\frac{e_1}{L-r}\right) + \pi \qquad (9)$$

Here, a subscript BDC represents the bottom dead center. Namely, $e_2$ represents an offset amount at which the absolute values of the oscillation angle at the bottom dead center and the minimum oscillation angle (Fig. 4(D)) at the compression stroke are substantially equal to each other. Here, being substantially equal also includes the case of being equal.

When this offset amount is set, while the crankshaft 24 rotates one revolution, the oscillation angle in the middle of the compression stroke can be suppressed. In addition, $e_3$ represents an offset amount at which the following equation is established.

[Equation 10]

$$e_3 = r \qquad (10)$$

Namely, $e_3$ is equal to the crank radius r (amount of eccentricity of the crankshaft). When this offset amount is set, while the crankshaft 24 rotates one revolution, the connecting rod 32 can be substantially parallel to the central axis of the cylinder inner peripheral surface 22a at the moment when the internal pressure of the cylinder 22 reaches the operating pressure of the compressor, and the oscillation angle in the middle of the compression stroke can be suppressed.

Further, the piston is made of a resin having good wear resistance based on the assumption that the compressor main body 1 is a non-lubricating type in which a lubricant is not used for lubrication of the sliding parts. However, this configuration can also be applied to a lubricating type. In this case, a lubricant film may intervene between the cylinder 22 and the spherical outer peripheral surface 33a of the piston by splash lubrication or the like to lubricate sliding surfaces. In this configuration, for example, the piston 33 can also be made from aluminum and integrally formed with the connecting rod 32, so that the number of components and the assembly man-hours can be reduced.

Second embodiment

In a second embodiment, a configuration will be described in which similar effects can be obtained without offsetting the cylinder 22 as illustrated in the first embodiment.

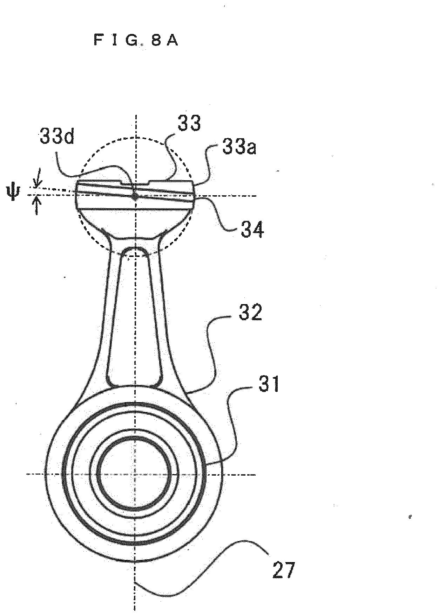

Fig. 8A illustrates a configuration example of a piston and a connecting rod in the second embodiment.

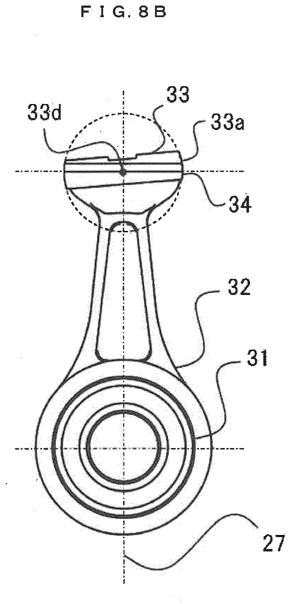

Incidentally, Fig. 8B illustrates a configuration example of the same components in the first embodiment for comparison.

The configuration illustrated in the first embodiment has restriction in designing the disposition of components or the shape of the compressor main body, and when the offset amount of the cylinder 22 cannot be sufficiently taken, inevitably, the effects also diminish. Such restriction is likely to be generated particularly when the components are common to other products.

In the first embodiment, the piston ring 34 is disposed to be orthogonal to the straight line 27 connecting the center 33d of the piston and the center of the big end portion bearing 31 of the connecting rod.

On the other hand, in the present embodiment, the piston ring 34 is not orthogonal to the straight line 27 but inclined by a certain offset angle φ.

Accordingly, while the crankshaft 24 rotates one revolution, the inclination of the piston ring 34 can be changed by the offset φ. Therefore, when the piston ring 34 is inclined in a direction opposite to the rotation direction (clockwise direction when the compressor main body rotates counterclockwise) of the compressor main body, even if the offset amount of the cylinder 22 is 0, the inclination of the piston ring 34 at the compression stroke can be reduced, so that a deterioration in sealing performance can be prevented.

Incidentally, the offset amount e of the cylinder 22 and the offset angle φ of the piston ring 34 can be set in combination, and a method can be used in which the cylinder 22 is offset in the allowable range of the restriction in design and the piston ring 34 is offset by an insufficient amount.

Meanwhile, a change in inclination of the piston ring 34 is slightly differently affected by the offsets of the types, and there are merits and demerits to be described below.

When the cylinder 22 is offset, at the top dead center at which the reciprocating inertial force of reciprocating components including the piston 33 and a piston side of the connecting rod 32 is maximized, the vector of the inertial force and the vector of the centrifugal force of a balance weight of the crankshaft 24 are shifted from each other. For this reason, the vibration during rotation of the compressor main body becomes worse in principle, which is a problem.

When the piston ring 34 is offset, the above problem does not occur. However, on the other hand, since the piston ring 34 is not orthogonal to the connecting rod 32, a part of a compressed gas load received by the piston ring 34 acts to press the piston 33 against the cylinder inner peripheral surface 22a. Therefore, the frictional loss or the amount of wear of a piston top is caused to increase.

Third embodiment

In a third embodiment, a configuration will be described in which the gap volume between the piston 33 and the valve plate 26 at the top dead center can be further reduced than in the first embodiment.

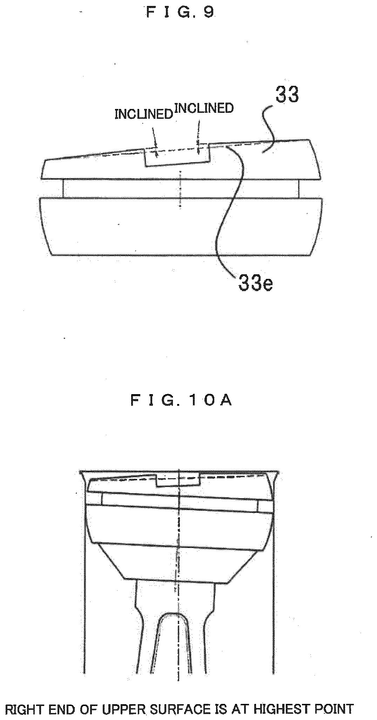

Fig. 9 illustrates a configuration example of the piston 33 in the third embodiment.

In the configuration illustrated in the first embodiment, the upper surface of the piston 33 is parallel to the valve plate 26 at the top dead center, and it seems that the gap volume is the smallest at a glance. However, in view of movements approximately at the top dead center, when the piston 33 is inclined with respect to the valve plate 26, the highest points of right and left corners of the piston 33 reach a height slightly exceeding the position at the top dead center.

Therefore, in order to avoid interference between the piston 33 and the valve plate 26, it is necessary that a gap equivalent to the difference is provided in the reciprocating direction in advance. The difference increases as the size of the inner diameter of the cylinder 22 increases, thereby causing an increase in gap volume.

Therefore, as illustrated in Fig. 9, the present embodiment has a configuration in which right and left sides of the upper surface of the piston 33 at the top dead center are inclined in a mountain shape, namely, a configuration in which the upper surface of the piston 33 at the top dead center has a shape protruding toward the crankcase (not illustrated) side surface of the valve plate 26. Incidentally, an outer line of the upper surface of the piston 33 in the first embodiment is illustrated by a broken line 33e for comparison.

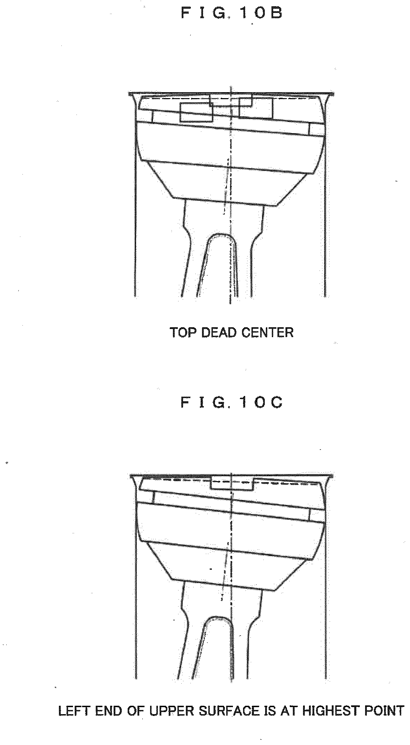

Fig. 10A is a view illustrating a case in which a right end of the upper surface of the piston 33 in the third embodiment is at a highest point. Fig. 10B is a view illustrating a case in which the piston 33 in the third embodiment is at the top dead center. Fig. 10C is a view illustrating a case in which a left end of the upper surface of the piston 33 in the third embodiment is at a highest point.

Since such a shape is adopted, as illustrated in Figs. 10A and 10C, interference at the timing when the right and left corners of the upper surface of the piston 33 approximately at the top dead center reach the highest points can be avoided, and as illustrated in Fig. 10B, the gap volume at the top dead center can be further reduced.

REFERENCE SIGNS LIST

| | |
|---|---|
| 1 | Compressor main body |
| 21 | Crankcase |
| 22 | Cylinder |
| 24 | Crankshaft |
| 32 | Connecting rod |
| 33 | Piston |

**Claims**

1. A compressor comprising:

   a piston that reciprocates inside a cylinder;
   a valve plate that closes an end portion of the cylinder;
   a connecting rod that supports the piston;
   a crankshaft that applies a rotating force to an end portion of the connecting rod; and
   a crankcase that rotatably supports the crankshaft,
   wherein the piston is an oscillating piston that reciprocates while oscillating inside the cylinder according to rotation of the crankshaft,
   a central axis of an inner diameter of the cylinder is disposed at a position shifted by an offset amount e with respect to a rotation center axis of the crankshaft, and
   an upper surface of the piston is substantially parallel to a crankcase side surface of the valve plate in a state where the piston is at a top dead center.

2. The compressor according to claim 1,
   wherein at a crank angle at which a line segment connecting a rotation center of the crankshaft and a center of a big end portion of the connecting rod is parallel to the central axis of the inner diameter of the cylinder, the upper surface of the piston or the crankcase side surface of the valve plate is not orthogonal to the central axis of the inner diameter of the cylinder.

3. The compressor according to claim 1,
   wherein a rotation axis of the crankshaft does not intersect the central axis of the inner diameter of the cylinder.

4. The compressor according to claim 1,
   wherein the piston is fixed to or integrated with the connecting rod.

5. The compressor according to claim 1,
   wherein the central axis of the inner diameter of the cylinder is disposed along a vertical direction.

6. The compressor according to claim 1,
   wherein the crankcase side surface of the valve plate is inclined.

7. The compressor according to claim 1,
   wherein the central axis of the inner diameter of the cylinder is disposed to be inclined.

8. The compressor according to claim 1,
   wherein the offset amount e is set to an offset amount e1 at which an absolute value of an oscillation angle of the connecting rod in a state where the piston is at the top dead center substantially coincides with an absolute value of a minimum value of an oscillation angle of the connecting rod at a compression stroke.

9. The compressor according to claim 1,
   wherein the offset amount e is equal to or greater than an offset amount e2 at which an absolute value of an oscillation angle of the connecting rod in a state where the piston is at a bottom dead center substantially coincides with an absolute value of a minimum value of an oscillation angle of the connecting rod at a compression stroke, and is equal to or less than an amount of eccentricity of the crankshaft.

10. The compressor according to claim 1,
    wherein the piston includes a lip ring that comes into contact with an inner peripheral surface of the cylinder.

11. The compressor according to claim 1,
    wherein the piston includes a piston ring that comes into contact with an inner peripheral surface of the cylinder.

12. The compressor according to claim 11,
    wherein the piston and the connecting rod are fastened to each other with a screw.

13. The compressor according to claim 1, further comprising:

    a compressor pulley fixed to the crankshaft;
    an electric motor pulley fixed to an electric motor; and
    a power transmission belt that transmits power between the compressor pulley and the electric motor pulley.

14. A compressor comprising:

    a piston that reciprocates inside a cylinder;
    a valve plate that closes an end portion of the cylinder;
    a connecting rod that supports the piston;
    a crankshaft that applies a rotating force to an end portion of the connecting rod; and
    a crankcase that rotatably supports the crankshaft,
    wherein the piston is an oscillating piston that reciprocates while oscillating inside the cylinder according to rotation of the crankshaft,
    the piston includes a piston ring that comes into contact with an inner peripheral surface of the cylinder, and
    the piston ring is inclined with respect to a plane orthogonal to a straight line connecting a center point of an oscillating motion of the piston and a center of a big end portion of the connecting rod.

15. The compressor according to claim 14,
    wherein the piston ring is inclined in a direction opposite to a rotation direction of the crankshaft with respect to the plane orthogonal to the straight line connecting the center point of the oscillating motion of the piston and the center of the big end portion of the connecting rod.

**16.** A compressor comprising:

a piston that reciprocates inside a cylinder;
a valve plate that closes an end portion of the cylinder;
a connecting rod that supports the piston;
a crankshaft that applies a rotating force to an end portion of the connecting rod; and
a crankcase that rotatably supports the crankshaft,
wherein the piston is an oscillating piston that reciprocates while oscillating inside the cylinder according to rotation of the crankshaft, and
an upper surface of the piston has a shape protruding toward a crankcase side surface of the valve plate in a state where the piston is at a top dead center.

FIG. 1

F I G. 2

F I G. 3 A

F I G. 3 B

39b

38

39a

A—A

22

37

A

A

33

22a

FIG.3C

FIG. 3D

FIG. 4

F I G. 5 A

F I G. 5 B

FIG. 5C

F I G. 6

OSCILLATION ANGLE

INCREASE

REDUCTION

OFFSET AMOUNT $e=0$

OFFSET AMOUNT $e=r/2$

INTERNAL PRESSURE OF CYLINDER

CRANK ANGLE (deg)

0    90    180    270    360

F I G. 7

FIG. 8A

F I G. 8 B

FIG. 9

INCLINED INCLINED        33

33e

FIG. 10A

RIGHT END OF UPPER SURFACE IS AT HIGHEST POINT

F I G. 1 0 B

TOP DEAD CENTER

F I G. 1 0 C

LEFT END OF UPPER SURFACE IS AT HIGHEST POINT

## INTERNATIONAL SEARCH REPORT

| | International application No. |
| --- | --- |
| | PCT/JP2020/010175 |

### A. CLASSIFICATION OF SUBJECT MATTER
Int. Cl. F04B39/00(2006.01)i
FI: F04B39/00 107A

According to International Patent Classification (IPC) or to both national classification and IPC

### B. FIELDS SEARCHED
Minimum documentation searched (classification system followed by classification symbols)
Int. Cl. F04B39/00

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2014-126001 A (LIFE INDUSTRY KK) 07 July 2014, | 1-7, 10-13 |
| A | paragraphs [0028]-[0049], fig. 1-6 | 8-9 |
| X | JP 2016-537559 A (DONGGUAN RICHTEK ELECTRONICS CO., LTD.) 01 December 2016, paragraphs [0026]-[0047], fig. 1-6 | 14-15 |
| X | JP 2001-271744 A (DENSO CORP.) 05 October 2001, paragraphs [0016]-[0022], fig. 1 | 14-15 |
| X | JP 10-89253 A (THOMAS INDUSTRIES INC.) 07 April 1998, paragraphs [0036]-[0043], fig. 1-3 | 16 |

☒ Further documents are listed in the continuation of Box C.    ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20.05.2020 | 02.06.2020 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

<table>
<tr><td colspan="2" align="center">**INTERNATIONAL SEARCH REPORT**</td><td colspan="2">International application No.<br>PCT/JP2020/010175</td></tr>
<tr><td colspan="4">C (Continuation).  DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>X</td><td colspan="2">JP 7-208368 A (TOKICO, LTD.) 08 August 1995, paragraphs [0013], [0014], [0020], [0036]-[0039], fig. 1, 2, 7</td><td>16</td></tr>
<tr><td>A</td><td colspan="2">JP 2016-531228 A (ILLINOIS TOOL WORKS INC.) 06 October 2016, fig. 1-4</td><td>1-15</td></tr>
<tr><td>A</td><td colspan="2">JP 2008-196341 A (DAIKIN INDUSTRIES, LTD.) 28 August 2008, paragraphs [0030], [0031], [0045], fig. 1-4</td><td>1-15</td></tr>
<tr><td>A</td><td colspan="2">JP 3206366 U (DONGGUAN RICHTEK ELECTRONICS CO. LTD.) 15 September 2016, fig. 4, 5</td><td>1-15</td></tr>
</table>

Form PCT/ISA/210 (continuation of second sheet) (January 2015)

**INTERNATIONAL SEARCH REPORT**
Information on patent family members

| International application No. |
| --- |
| PCT/JP2020/010175 |

| Patent Documents referred to in the Report | Publication Date | Patent Family | Publication Date |
| --- | --- | --- | --- |
| JP 2014-126001 A | 07.07.2014 | (Family: none) | |
| JP 2016-537559 A | 01.12.2016 | US 2016/0201660 A1 paragraphs [0046]-[0074], fig. 1-6 WO 2015/027729 A1 KR 10-2015-0079872 A | |
| JP 2001-271744 A | 05.10.2001 | (Family: none) | |
| JP 10-89253 A | 07.04.1998 | US 5644969 A description, column 2, line 31 to column 3, line 28, fig. 1-3 GB 2314603 A DE 19727186 A1 | |
| JP 7-208368 A | 08.08.1995 | (Family: none) | |
| JP 2016-531228 A | 06.10.2016 | US 2016/0195078 A1 fig. 1-4 WO 2015/047643 A1 CN 105556123 A | |
| JP 2008-196341 A | 28.08.2008 | US 2010/0319547 A1 paragraphs [0320], [0321], [0341], fig. 38-40 WO 2008/096874 A1 EP 2123911 A1 CN 101605993 A KR 10-2009-0109573 A | |
| JP 3206366 U | 15.09.2016 | WO 2017/173715 A1 fig. 4, 5 CN 205478197 U KR 20-2017-0003574 U | |

Form PCT/ISA/210 (patent family annex) (January 2015)

**EP 4 039 976 A1**

**Patent documents cited in the description**

- JP 3174674 U

- JP 2004092638 A